Europäisches Patentamt

European Patent Office

Office européen des brevets

(11) Publication number: **0 441 985 A1**

## EUROPEAN PATENT APPLICATION
### published in accordance with Art. 158(3) EPC

(21) Application number: 90913252.4

(22) Date of filing: 06.09.90

(86) International application number:
PCT/JP90/01146

(87) International publication number:
WO 91/03524 (21.03.91 91/07)

(51) Int. Cl.5: **C09J 7/02**

(30) Priority: 06.09.89 JP 232251/89
06.09.89 JP 232252/89

(43) Date of publication of application:
21.08.91 Bulletin 91/34

(84) Designated Contracting States:
**DE FR GB IT SE**

(71) Applicant: **NAGOYA OILCHEMICAL CO., LTD.**
**213-5 Honowari, Minamishibata-cho**
**Tokai-shi, Aichi-ken(JP)**

(72) Inventor: **HORIKI, Seinosuke Nagoya**
**Oilchemical Co., Ltd.**
**213-5, Honowari Minamishibata-cho**
**Tokai-shi Aichi 476(JP)**
Inventor: **MAKINO, Reiji Nagoya Oilchemical**
**Co., Ltd.**
**213-5, Honowari Minamishibata-cho**
**Tokai-shi Aichi 476(JP)**

(74) Representative: **Senior, Alan Murray et al**
**J.A. KEMP & CO 14 South Square Gray's Inn**
**London WC1R 5EU(GB)**

(54) METHOD OF FIXING MASKING MATERIAL AND MASKING MATERIAL ITSELF.

(57) This invention provides a method of fixing a masking material made of polyolefin to the surface to be protected of a member while sticking adhesive tape to te upper surface of the masking material and the surface of the member to fix the masking material, and provides a masking material used therefor. According to this method, the adhesive layer of the adhesive tape is not transferred to the surface of the member when the masking material is exfoliated from the surface of the protected surface of the member.

FIG.1

## Industrial Field of the Invention

The present invention relates to an attaching method for a masking member and a masking member which are employed to protect part(s) of surface(s) of an article from a surface treatment when said article is subjected to said surface treatment.

## Description of the Prior Art

Hitherto, a masking member made of a polyolefin has been provided (e.g. Japanese Utility Model S.N.91527/1988). Said masking member made of polyolefin has the advantages that said masking member is light and inexpensive and has a good solvent resistance. Further, polyolefin has good moldability and when polyolefin is used as a material for the masking member, a masking member having any form can be easily molded by such as vacuum forming, injection molding, and the like.

An adhesive layer is formed on a part of said traditional masking member, which attaches to a part of the surface of an article to be protected from a surface treatment and said masking member is attached to said part by said adhesive layer. Nevertheless, polyolefin has a poor affinity with said adhesive and when said masking member is removed from said part, said adhesive layer transfers from said masking member to said part. To prevent said transference of said adhesive layer, a method where a primer is coated on the surface of polyolefin, and then said adhesive is formed on the coating layer of said primer has been provided. However, as said method has a double coating process, the manufacturing process for the masking member will be complicated and the manufacturing expences become expensive by employing said method.

## DISCLOSURE OF THE INVENTION

The present invention relates to an attaching method comprising attaching a masking member made of polyolefin to a part of an article and fixing said masking member on said part by an adhesive tape which is attached between the outside of said masking member and the surface of said article. Further, the present invention relates to a masking member used in said method, which is made of polyolefin and adhesive tape(s) is(are) attached on the outside of said masking member and the end-(s) of said adhesive tape(s) is(are) exposed from the circumference of said masking member, and a masking member also used in said method, which is made of polyolefin and attaching hole(s) is(are) formed in said masking member and adhesive tape(s) is(are) attached to the outside of said masking member covering said attaching hole(s).

Accordingly, in the present invention, (an) adhesive layer(s) is(are) simply formed by attaching adhesive tape(s) to the surface of the masking member and the coating process to form (an) adhesive layer(s) can be omitted, and further, said adhesive layer(s) do(does) not transfer from said masking member to the part having been protected by said masking member.

## BRIEF DESCRIPTION OF THE DRAWINGS

FIGS. 1 to 6 relate to the first embodiment of the present invention.
FIG. 1 is a perspective view of a masking member.
FIG. 2 is a sectional view taken along the line A-A of FIG. 1.
FIG. 3 is a sectional view taken along the line B-B of FIG. 1.
FIG. 4 is a perspective view of a bumper.
FIG. 5 is a cross-sectional view in the coating process.
FIG. 6 is a cross-sectional view in the removing process of said masking member.
FIGS. 7 to 11 relate to the second embodiment of the present invention.

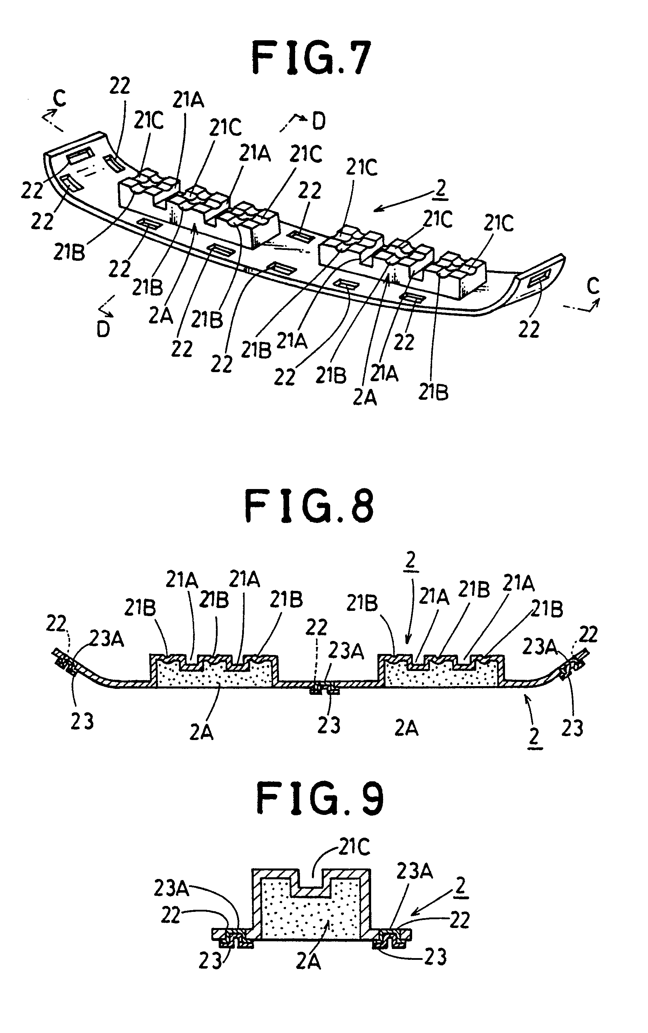

FIG. 7 is a perspective view of a masking member.
FIG. 8 is a sectional view taken along the line C-C of FIG. 7.
FIG. 9 is a sectional view taken along the line D-D of FIG. 7.

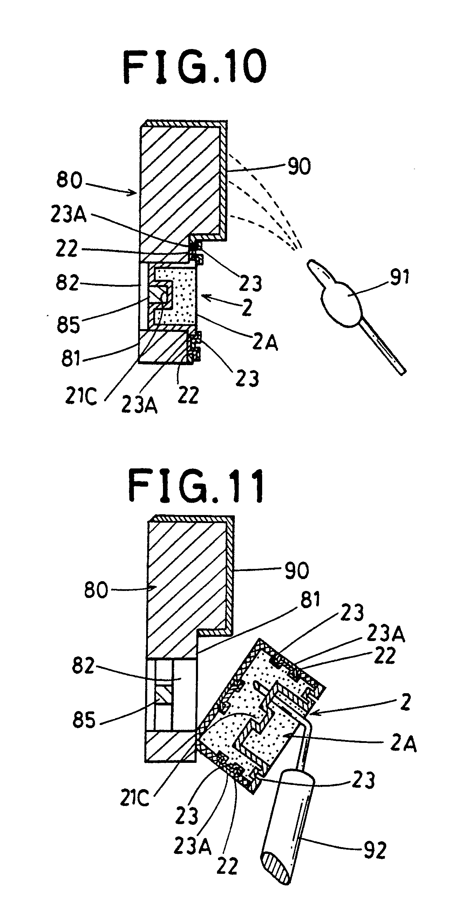

FIG. 10 is a cross-sectional view in the coating process.
FIG. 11 is a cross-sectional view in the removing process of said masking member.

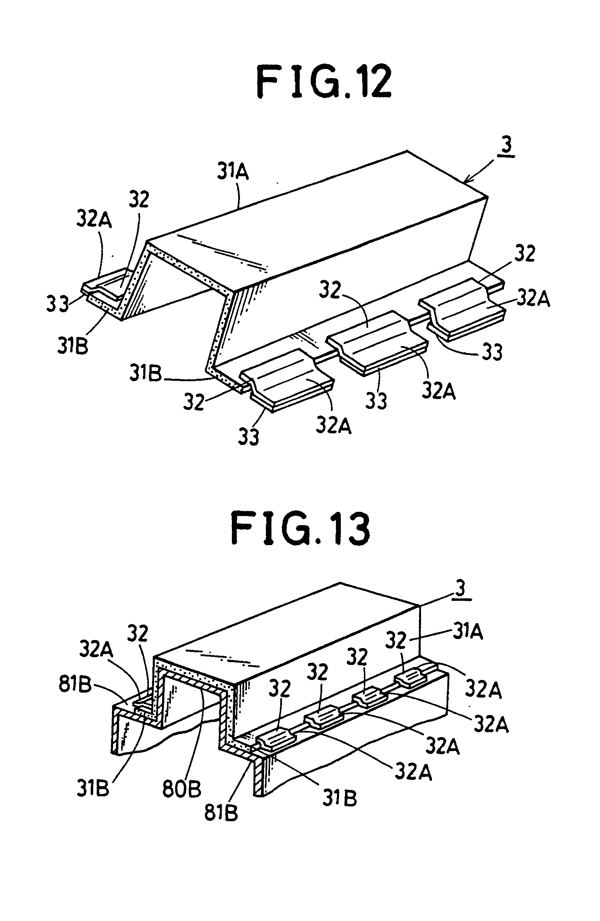

FIGS. 12 to 15 relate to the third embodiment of the present invention.
FIG. 12 is a perspective view of a masking member
FIG. 13 is a partial perspective view in the case where said masking member is attached to a window frame.

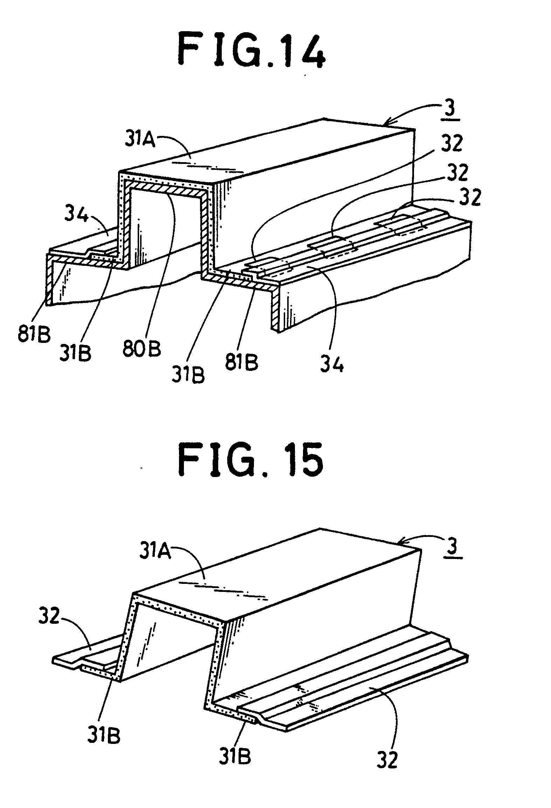

FIG. 14 is a partial perspective view in the case where partition tapes are attached to both sides of said masking member.
FIG. 15 is a perspective view of said masking member on which a pair of long adhesive tapes are attached.

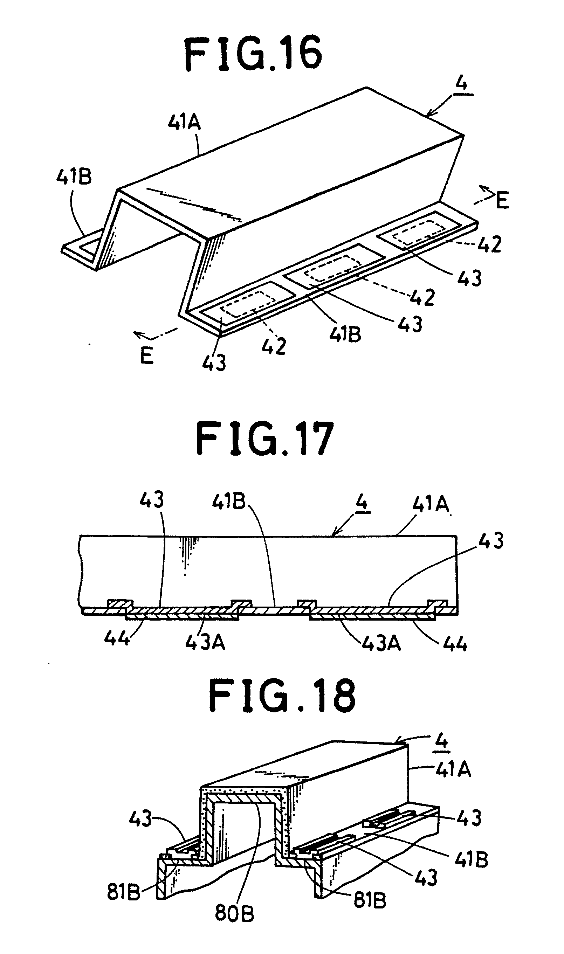

FIGS. 16 to 18 relate to the fourth embodiment of the present invention.
FIG. 16 is a perspective view of a masking member.
FIG. 17 is a sectional view taken along the line E-E of FIG. 16.
FIG. 18 is a partial perspective view in the case where said masking member is attached to a window frame.

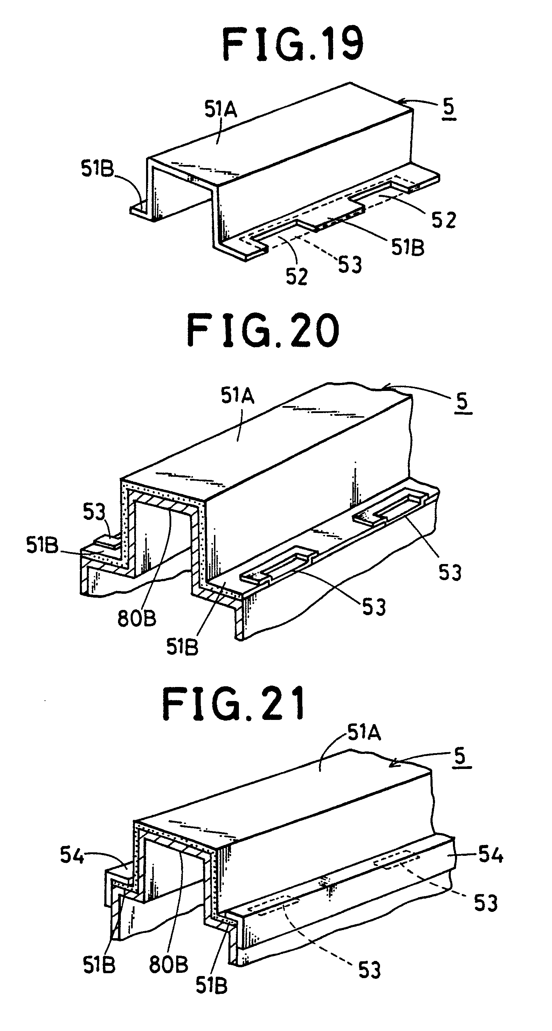

FIGS. 19 to 21 relate to the fifth embodiment of the present invention.

FIG. 19 is a perspective view of a masking member.

FIG. 20 is a partial perspective view in the case where said masking member is attached to a window frame.

FIG. 21 is a partial perspective view in the case where partition tapes are attached to both sides of said masking member.

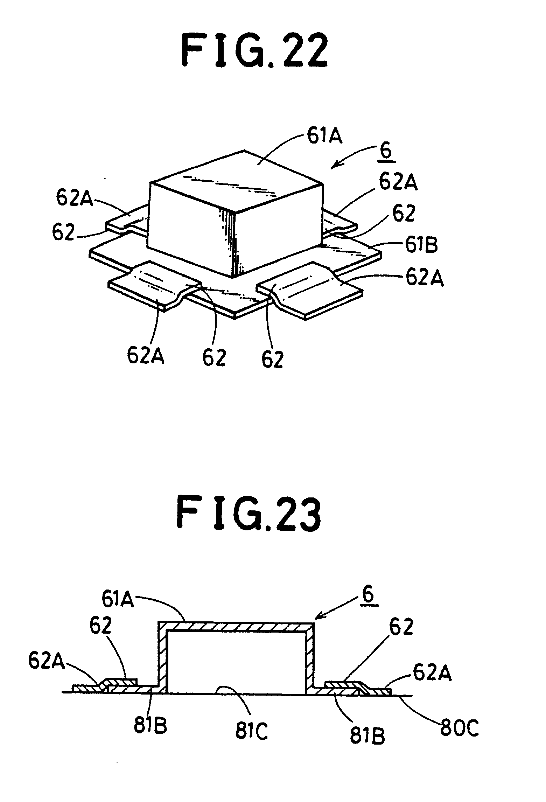

FIG. 22 and FIG. 23 relate to the sixth embodiment of the present invention.

FIG. 22 is a perspective view of a masking member.

FIG. 23 is a cross-sectional view in the case where said masking member is attached to a surface of an article.

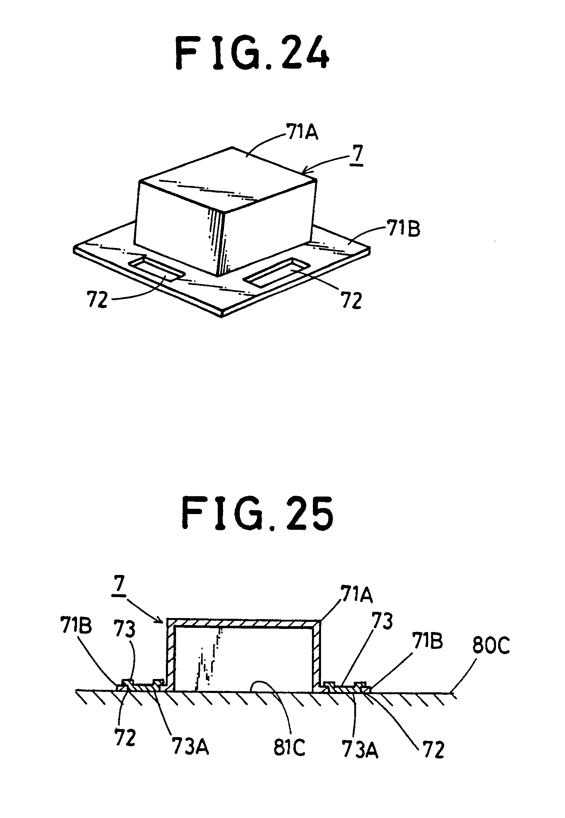

FIG. 24 and FIG. 25 relate to the seventh embodiment of the present invention.

FIG. 24 is a perspective view of a masking member.

FIG. 25 is a cross-sectional view in the case where said masking member is attached to the surface of the article.

## DETAILED DESCRIPTION OF THE INVENTION

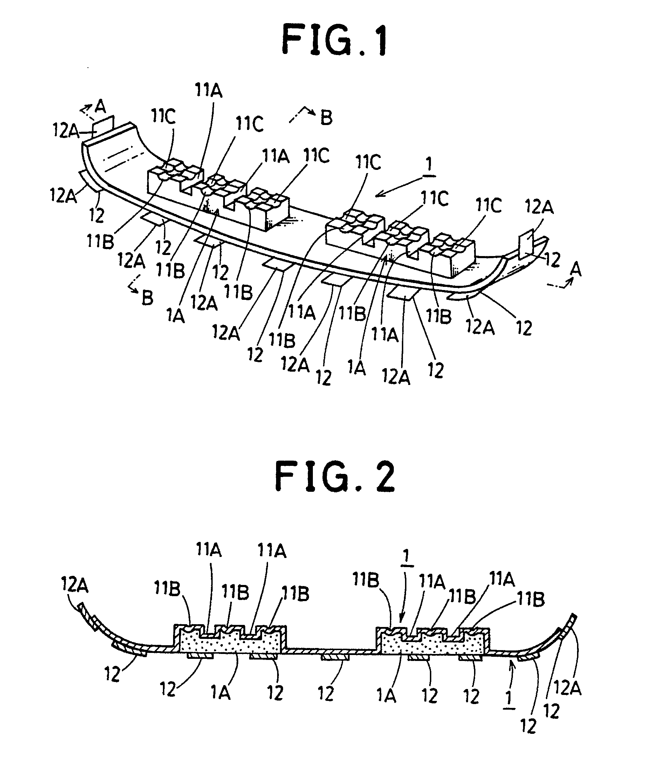

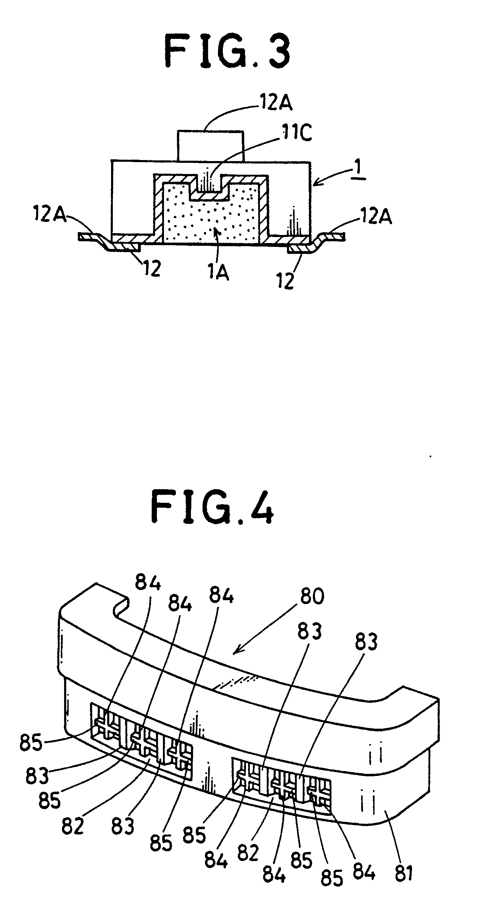

FIGS. 1 to 6 show the first embodiment of the present invention. A masking member (1) of this embodiment is produced by the vacuum forming of a polyolefin sheet such as polypropylene sheet, polyethylene sheet, and the like and said masking member (1) is used to protect for instance a skirt part (81) of a bumper (80) as shown in FIG. 4. Referring to FIG. 4, said skirt part (81) is arranged in the lower part of said bumper (80) and a pair of air-inlets (82), (82) are formed in said skirt part (81). Two pairs of four pillars (83), (83) and vertical and horizontal mullions (84), (85) are formed in each of said air-inlets (82), (82). Said masking member (1) has a shape corresponding to said skirt part (81) and accordingly both ends of said masking member (1) are curved backward and a pair of inserting parts (1)A, (1)A corresponding to said air-inlets (82), (82) are formed in said masking member (1). Pillar inserting grooves (11)A, (11)A, vertical and horizontal mullion inserting grooves (11) B, (11)C are respectively formed in said inserting parts (1)A, (1)A, and further, adhesive tapes (12) are attached to the circumference of said masking member (1) and the outside ends of said adhesive tapes (12) protrude respectively out from the circumference of said masking member (1) as exposed parts (12)A. In this case, it is desirable that the area of the inside part of said adhesive tape (12) is larger than the area of said exposed parts (12)A of said adhesive tape (12).

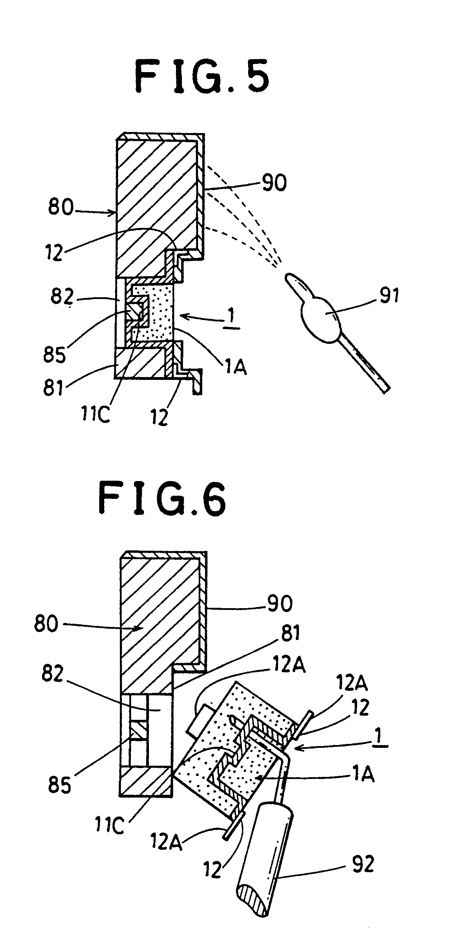

Said masking member (1) is attached to said skirt part (81) of said bumper (80) to cover the whole of said skirt part (81) as shown in FIG. 5 and said inserting parts (1)A of said masking member (1) are respectively inserted into said air-inlets (82), (82) and said pillars (83), (83) of air-inlets (82), (82) are respectively inserted into said pillar inserting grooves (11)A, (11)A and said vertical and horizontal mullions (84), (85) are respectively inserted into said vertical and horizontal mullions inserting grooves (11) B, (11)C. After which said exposed parts (12)A of said adhesive tape (12) attached to the outside of said masking member (1) are respectively attached to the surface of said skirt part (81) to fix said masking member (1) to said skirt part (81).

After said masking member (1) is attached to said skirt part (81), for instance, a paint is coated on said bumper (80) by a spray gun (91) to form a coating layer (90), and said coating layer (90) is not formed on said skirt part (81) since said skirt part (81) is protected by said masking member (1). After said coating, said masking member (1) is removed from said skirt part (81) by a hook (92) or worker's hand as shown in Fig. 6. In this case, said adhesive tapes (12) are peeled off together with said masking member (1) and the adhesive layers of said adhesive tapes (12) are not transferred to the surface of said skirt part (81). In the case where the area of the inside part of said adhesive tape (12) is larger than the area of said exposed parts (12)A of said adhesive tape as above described, said adhesive tape (12) is peeled off together with said masking member (1) without fail.

Inorganic filler such as talc, bentonite, clay, calcium carbonate and the like can be mixed in said polyolefin sheet used in this embodiment. Said polyolefin sheet in which said inorganic filler is mixed has good heat resistance and accordingly a masking member made of said sheet has durability against several times the drying process of the coating through heating.

Said adhesive tape (12) consists of an adhesive layer and a base sheet, and a material having affinity with said adhesive layer such as paper, non-woven matrial, and the like is used as said base sheet but polyester film, acetate film and the like are also used as said base sheet. Nevertheless, said base sheet should have a larger affinity with said adhesive layer than the surface to be protected by said masking member.

FIGS. 7 to 9 show the second embodiment of the present invention. A masking member (2) of this embodiment is produced by the vacuum forming of a polyolefin sheet the same as for the first embodiment and said masking member (2) is used to protect said skirt part (81) of said bumper (80) the same as for the first embodiment. Said masking member (1) has a shape corresponding to said skirt part (81) and accordingly both ends of said masking member (1) are curved backward and a pair of inserting parts (2)A, (2)A corresponding to said air-inlets (82), (82) are formed in said masking member (2). Pillar inserting grooves (21)A, (21)A, vertical and horizontal mullions inserting grooves (21) B, (21)C are respectively formed in said inserting parts (2)A, (2)A, and further, on the circumference of said masking member which is the surface attached to a part of the surface to be protected, a plural number of attaching holes (22) are formed.

Said masking member (2) is attached to said skirt part (81) of said bumper (80) to cover the whole of said skirt part (81) as shown in FIG. 10 and said inserting parts (2)A of said masking member (2) are respectively inserted into said air-inlets (82), (82) and said pillars (83), (83) of said air-inlets (82), (82) are respectively inserted into said pillar inserting grooves (21)A, (21)A and said vertical and horizontal mullions (84), (85) are respectively inserted into said vertical and horizontal mullion inserting grooves (21)B, (21)C. Adhesive tapes (23) the same as for the first embodiment are attached to the outside of said masking member (2) before said masking member (2) is attached to said skirt part (81) as shown in FIG. 8 and FIG. 9, and parts of said adhesive tapes (23) are respectively exposed from said attaching holes (22) as exposed parts (23)A and said exposed parts (23)A of said adhesive tapes (23) are respectively attached to the surface of said skirt part (81) and thus said masking member (2) is attached and fixed to said skirt part (81).

After said masking member (2) is attached to said skirt part (81), for instance, a part is coated on said bumper (80) by a spray gun (91) to form a coating layer (90) the same as for the first embodiment, and said coating layer (90) is not formed on said skirt part (81) since said skirt part (81) is protected by said masking member (1). After said coating, said masking member (1) is removed from said skirt part (81) by a hook (92) or worker's hand as shown in FIG. 11. In this case, said adhesive tapes (12) are peeled off together with said masking member (1) and adhesive layers of said adhesive tapes (12) do not transfer to the surface of said skirt part (81).

FIGS. 12 to 15 show the third embodiment of the present invention. A masking member (3) shown in FIG. 12 consists of a body (31)A having a channel section and a pair of flange parts (31)B extending from both sides of said body (31)A and said masking member (3) is produced by the vacuum forming of polyolefin sheet the same as for the foregoing embodiments. Three pieces of said adhesive tape (32) the same as for the foregoing embodiments are attached onto the outside of each flange part (31)B of said masking member (3) and the exposed parts (32)A of said pieces of said adhesive tape (32) from said flange parts (31)B are respectively covered with release sheets (33) such as polyethylene film, polypropylene film, and the like.

When said masking member (3) is attached to a window frame (80)B of an automobile, as shown in FIG. 13, said release sheets (33) are respectively removed from said exposed parts (32)A of said pieces of said adhesive tape (32) and said exposed parts (32)A are respectively attached to the surface of both sides (81) B, (81)B of said window frame (80)B to fix said masking member (3) on said window frame (80)B. After then, a coating process is carried out the same as for the foregoing embodiments and then said masking member (3) is removed from said window frame (80)B together with said pieces of said adhesive tape (32). As shown in FIG. 14, futher partition tapes (34) may be attached over said pieces of said adhesive tape (32) of said masking member (3). Said partition tapes (34) clarify the boundary lines between the parts of the surface to have been protected and the coated surface. Still further, as shown is FIG. 15, a pair of long adhesive tapes (32) may be respectively attached to said flange parts (31)B of said masking member (3).

FIGS. 16 to 18 show the fourth embodiment of the present invention. A masking member (4) shown in FIG. 16 consists of a body (41)A having a channel section and a pair of flange parts (41)B extending from both sides of said body (41)A and said masking member (4) is produced by the vacuum forming of polyolefin sheet the same as for the foregoing embodiments. A plural number of attaching holes (42) are formed on the flange parts (41)B and said adhesive tape (43) the same as for the foregoing embodiments and are attached on the outside of each flange part (41)B of said masking member (4) and the exposed parts (43)A of said pieces of said adhesive tape (43) from said attaching holes (42) are respectively covered with release sheets (44) such as polyethylene film, polypropylene film, and the like, as shown in FIG. 17.

When said masking member (4) is attached to a window frame (80)B of an automobile the same as for the third embodiment, as shown in FIG. 18, said release sheets (44) are respectively removed from said exposed parts (43)A of said pieces of said adhesive tape (43) from said attaching holes (42) and said exposed parts (43)A are respectively attached to the surface of both sides (81)B, (81)B of said window frame (80)B to fix said masking member (4) onto said window frame (80)B. After then, a coating process is carried out the same as for the foregoing embodiments and then said masking member (4) is removed from said window frame (80)B together with said pieces of said adhesive tape (43).

FIGS. 19 to 21 show the fifth embodiment of the present invention. A masking member (5) shown in FIG. 19 consists of a body (51)A having a channel section and a pair of flange parts (51)B extending from both sides of said body (51)A and said masking member (5) is produced by the vacuum forming of polyolefin sheet the same as for the foregoing embodiments. A plural number of lacking parts (52) are formed on the flange parts (51)B.

Said masking member (5) is used to protect the window frame of an automobile the same as for said masking members of the third and fourth embodiments and adhesive tapes (53) are attached to the outsides of said flange parts (51)B of said masking member (5) to attach said masking member (5) to the window frame by attaching the exposed parts (53)A of said adhesive tapes (53) from said lacking parts (52) of said flange parts (51)B as shown in FIG. 20. As shown in FIG. 21, further partition tapes (54) may be attached on said flange parts (51)B of said masking member. Said partition tapes (54) are used to clarify the boundary lines between parts of the surface having been protected and the coating parts.

FIG. 22 and FIG. 23 show the sixth embodiment of the present invention. Referring to said figures, a masking member (6) consists of a box-type body (61)A and a flange part (61)B extending from the circumference of said body (61)A and said masking member (6) is produced by the vacuum forming of polyolefin sheet the same as for the foregoing embodiments.

Said masking member (6) is attached to a part (81)C of a flat surface of an article (80)C to be protected by the exposed parts (62)A of the adhesive tapes (62) from said flange parts (61)B of said masking member (6) the same as for the foregoing embodiments.

FIG. 24 and FIG. 25 show the seventh embodiment of the present invention. Referring to said figures, a masking member (7) consists of a box-type body (71)A and a flange part (71)B and said masking member (7) is produced by the vacuum forming of polyolefin sheet the same as for the foregoing embodiments. A plural number of attaching holes (72) are formed in said flange part (71)B of said masking member (7).

As shown in FIG. 25, said masking member (7) is attached to a part (81)C of a flat surface of an article (80)C to be protected by the exposed parts (73)A of the adhesive tapes (73) from said attaching holes (72) of said flange part (71)B the same as for the sixth embodiment.

All of the foregoing embodiments relate to the spray coating as a surface treatment but the present invention can be applied in another surface treatment such as an electro-deposition process, electro-static coating, plating, phosphatizing, and the like.

## Claims

1. An attaching method for a maskig member comprising attaching a masking member made of polyolefin to a part of an article and fixing said masking member onto said part by an adhesive tape which is attached between the outside of said masking member and the surface of said article.

2. An attaching method of Claim 1, where the end(s) of said adhesive tape(s) is(are) exposed from the circumference of said masking member and said masking member is attached to said part by attaching said exposed part(s) of said adhesive tape(s) to the surface of said article.

3. An attaching method of Claim 1, where attaching hole(s) is(are) formed in said masking member and adhesive tape(s) are attached to the outside of said masking member covering said attaching hole(s) and said masking member is attached to said part by attaching the exposed part(s) of said adhesive tape(s) from said attaching hole(s) to the surface of said article.

4. A masking member used in the method of Claim 2 consisting of a masking member made of polyolefin and with adhesive tape(s) attached to the outside of said masking member wherein the end(s) of said masking member is(are) exposed from the circumference of said masking member.

5. A masking member used in the method of Claim 3 consisting of a masking member made of polyolefin and where attaching hole(s) is(are) formed in said masking member, and adhesive tape(s) is(are) attached to the outside of said masking member covering said attaching hole(s).

# FIG.1

11A  11C  11C  11A  11C  11C  1  11C  11C  11C  12A
12A  A  12A  12  12A  12  11B  12A  11B  12  11A  11B  11A  12A  11B  12  A
12A  12  11B  12  11B  1A  12A  12  11B  1A  12A  12  12
B  12A  12  12A  12

# FIG. 2

11A  11A  1  11B  11A  11A
12A  11B  11B  11B  11B  11B  11B
12  12  1A  12  12  1A  12  12  1  12A
12  12

# FIG. 3

# FIG. 4

# FIG. 5

# FIG.6

# FIG.7

# FIG.8

# FIG.9

# FIG.10

# FIG.11

# F I G.12

# FIG.13

11

# FIG.14

# FIG. 15

# FIG.16

# FIG.17

# FIG.18

# FIG.19

# FIG.20

# FIG.21

# FIG.22

# FIG.23

# FIG.24

71A

7

71B

72

72

# FIG.25

7

71B  73

73  71A

73  71B  80C

72  73A  81C  73A  72

# INTERNATIONAL SEARCH REPORT

International Application No PCT/JP90/01146

**I. CLASSIFICATION OF SUBJECT MATTER** (if several classification symbols apply, indicate all) *

According to International Patent Classification (IPC) or to both National Classification and IPC

Int. Cl$^5$    C09J7/02

**II. FIELDS SEARCHED**

| Minimum Documentation Searched [7] | |
|---|---|
| Classification System | Classification Symbols |
| IPC | C09J7/02, B05B15/04, B05D1/32, B05D7/02 |

Documentation Searched other than Minimum Documentation
to the Extent that such Documents are Included in the Fields Searched [8]

| | |
|---|---|
| Jitsuyo Shinan Koho | 1926 – 1990 |
| Kokai Jitsuyo Shinan Koho | 1971 – 1990 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 59-011335 (Mitsuboshi Belting Ltd.), 20 January 1984 (20. 01. 84), (Family: none) | 1 – 5 |
| Y | JP, A, 59-222263 (Nichihi Kosan K.K.), 13 December 1984 (13. 12. 84), (Family: none) | 1 – 5 |
| Y | JP, A, 51-024639 (Ishikawajima-Harima Heavy Industries Co., Ltd.), 28 February 1976 (28. 02. 76), (Family: none) | 1 – 5 |
| A | JP, U, 60-124668 (Kyoraku K.K.), 22 August 1985 (22. 08. 85), (Family: none) | 1 – 5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| October 25, 1990 (25. 10. 90) | November 13, 1990 (13. 11. 90) |
| International Searching Authority | Signature of Authorized Officer |
| Japanese Patent Office | |

Form PCT/ISA/210 (second sheet) (January 1985)